Europäisches Patentamt

European Patent Office

Office européen des brevets

(11) Numéro de publication: **0 094 315**
**A2**

(12) **DEMANDE DE BREVET EUROPEEN**

(21) Numéro de dépôt: 83400936.7

(22) Date de dépôt: 09.05.83

(51) Int. Cl.³: **G 01 F 23/00**

(30) Priorité: 12.05.82 FR 8208254

(43) Date de publication de la demande: 16.11.83
Bulletin 83/46

(84) Etats contractants désignés: BE DE GB IT LU NL

(71) Demandeur: e.d. VEGLIA, 125, rue de Montreuil,
F-75540 Paris Cedex 11 (FR)

(72) Inventeur: Humbert, Jean, 23, Avenue des Alizées, Port
Sud F-91650 Breuillet Essonne (FR)

(74) Mandataire: Bloch, Robert et al, 39 avenue de Friedland,
F-75008 Paris (FR)

(54) Dispositif de mesure et d'affichage de niveau et/ou autre caractéristique analogue d'un liquide d'un réservoir, en particulier d'huile dans un carter-moteur de véhicule automobile.

(57) L'invention a pour objet un dispositif de mesure et d'affichage de niveau et/ou autre caractéristique analogue d'un liquide d'un réservoir, notamment, pression, température et tension, en particulier de l'huile dans un carter-moteur de véhicule automobile, du type comportant au moins un capteur de mesure de type analogique, une unité de traitement numérique des signaux émis par le capteur et un interface de conversion analogique/numérique interposé entre le capteur et l'unité de traitement.

Selon l'invention, ce dispositif comporte la conversion analogique/numérique des mesures de niveau est réalisée en mesurant le temps que met un condensateur pour se charger à une tension égale à celle qui existe aux bornes du capteur, dont on veut traiter et afficher la mesure.

## Dispositif de mesure et d'affichage de niveau et/ou autre caractéristique analogue d'un liquide d'un réservoir, en particulier d'huile dans un carter-moteur de véhicule automobile.

La présente invention a pour objet un dispositif de mesure et d'affichage de niveau et/ou autre caractéristique analogue d'un liquide d'un réservoir, notamment, pression, température et tension, en particulier de l'huile dans un carter-moteur de véhicule automobile, du type comportant au moins un capteur de mesure de type analogique, une unité de traitement numérique des signaux émis par le capteur et un interface de conversion analogique/numérique interposé entre le capteur et l'unité de traitement.

L'invention vise à réaliser un dispositif de ce type tel qu'il soit de réalisation simple et pratique et nécessite des temps de réglage et d'étalonnage aussi réduits que possible.

A cet effet, l'invention prévoit que la conversion analogique/numérique des mesures de niveau est réalisée en mesurant le temps que met un condensateur pour se charger à une tension égale à celle qui existe aux bornes du capteur, dont on veut traiter et afficher la mesure. L'ordre de mesure peut être donné en bloquant un transistor, monté en parallèle avec le condensateur, et la mesure obtenue en comptant, à partir de l'instant de blocage, le nombre de périodes élémentaires jusqu'à ce que la sortie mesure passe au niveau 1.

L'unité de traitement peut être étalonnée par "apprentissage", c'est-à-dire par présentation successive à celle-ci d'étalons de sondes niveau mini et niveau maxi et d'émetteurs de pression mini et éventuellement maxi.

Connaissant les valeurs mesurées et les valeurs désirées, des facteurs de correction sont établis, dont l'unité de traitement affectera ensuite les valeurs mesurées.

Si le capteur de niveau est une sonde à fil chaud, elle est reliée à l'unité de traitement par un étage générateur de courant commandé par cette unité.

Le courant peut être transmis à la sonde de niveau par l'intermédiaire d'un transistor ou d'un darlington dont la base est mise au niveau 0 ou au niveau 1 par l'unité de traitement.

Si le récepteur d'affichage des mesures est unique, un témoin lumineux est prévu permettant d'indiquer quelle mesure, niveau ou pression par exemple est affichée.

A titre nullement limitatif, on a représenté au dessin annexé un exemple de réalisation de dispositif de mesure selon l'invention, dessin sur lequel :

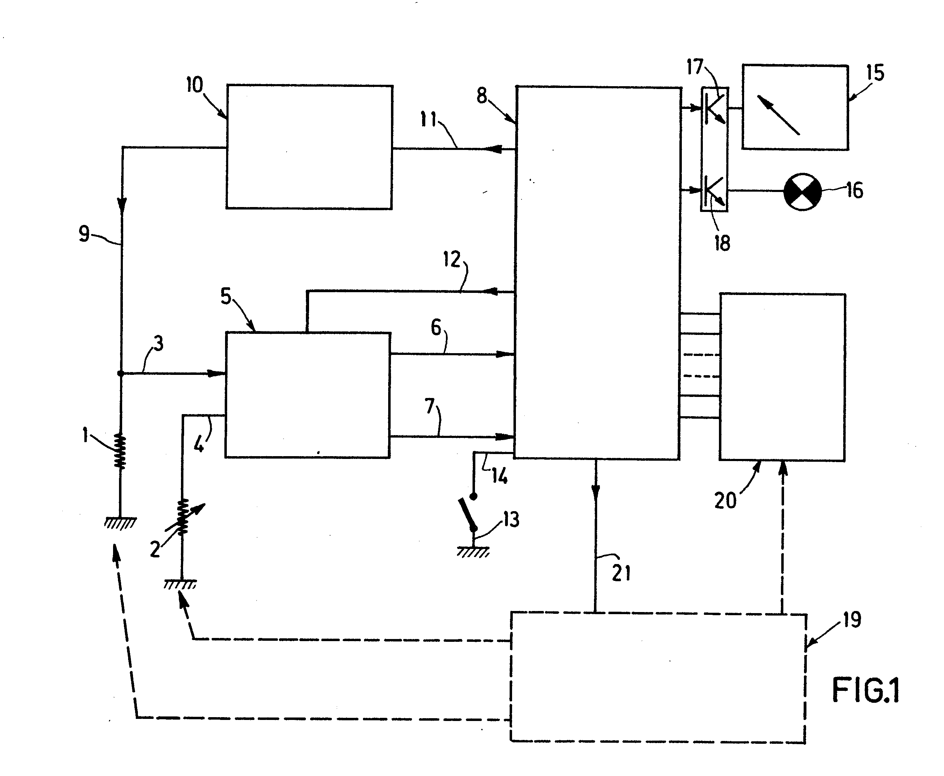

- la figure 1 est le schéma général par blocs de l'ensemble du dispositif;

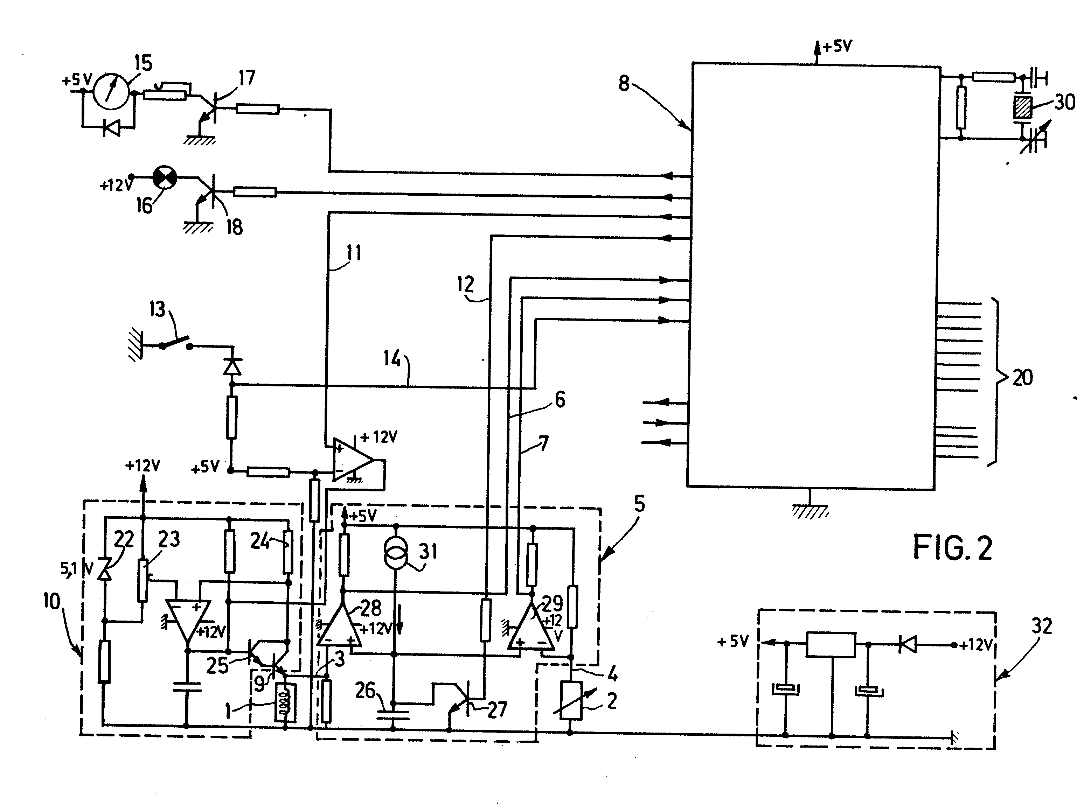

- la figure 2 est le schéma de principe de réalisation.

Dans l'exemple représenté, la sonde de niveau de liquide 1, qui est une sonde à fil chaud et la sonde de pression 2, qui est du type rhéostat, sont reliées par les lignes 3 et 4, respectivement, à un interface de mesure 5, dont les signaux de mesure sont transmis par 6 et 7 à l'unité de traitement 8. La sonde 1 est alimentée par la ligne 9 venant du générateur de courant 10 commandé par la ligne 11 sortant de l'unité de traitement 8. L'interface de mesure 5 reçoit l'ordre de mesure par la ligne 12 sortant de l'unité de traitement 8. Un manocontact 13 est relié par 14 à l'unité 8. Le récepteur unique 15 et la lampe-témoin 16 sont reliés à l'unité 8 par l'intermédiaire de transistors 17, 18.

Le récepteur 15 peut être un galvanomètre bobiné intégrant un signal tout ou rien, dont on fait varier le rapport cyclique. Un système d'étalonnage 19 définit les paramètres d'étalonnage, entrant par 20 dans l'unité 8, à partir des mesures brutes, sortant par 21 de l'unité 8, et obtenues avec les capteurs étalons.

Le générateur 10 du courant qui doit traverser la sonde 1 comporte une diode Zener 22, un potentiomètre 23, ou deux résistances, diviseur de tension et une résistance 24 aux bornes de laquelle on fait apparaître la tension étalon. Le courant qui traverse cette résistance est transmis par l'intermédiaire d'un transistor ou Darlington 25 à la sonde 1 qui est alors traversée par ce même courant. L'unité de traitement 8 commande le générateur 10 par mise au niveau 0 ou au niveau 1 de la base de Darlington 25.

L'interface de mesure 5 comporte un condensateur 26, chargé à courant constant par le générateur 31, et dont l'une des bornes est à la masse et qui est monté en parallèle avec un transistor 27 dont la base est reliée par la ligne 12 à l'unité 8. Les deux sondes 1 et 2 sont reliées, respectivement, par 3 et 4 à l'une des entrées des amplis de sortie 28, 29, eux-mêmes reliés par les lignes 6 et 7 à l'unité de traitement 8. Les autres entrées des amplis 28, 29 sont reliés à la seconde borne du condensateur 26.

L'ordre de mesure est donné par 12 en bloquant le transistor 27 et, en comptant, à partir de cet instant, le nombre de périodes élémentaires jusqu'à ce que la sortie mesure par 6 et 7 passe au niveau 1. On mesure donc le temps que met le condensateur pour se charger à une tension égale à celle qui existe aux bornes du capteur dont on veut connaître la valeur.

Les séquences de fonctionnement peuvent être les suivantes:

Si le manocontact 13 est fermé, la lampe 16 s'allume; la sonde de niveau 1 est traversée par un courant constant (par exemple 200 mA) pendant, par exemple, 1,75 seconde. Le circuit électronique 26, 27, 28 de l'interface de mesure 5 effectue les mesures initiales et finales de la résistance de la sonde 1; l'écart entre ces deux mesures est traité, puis affiché par l'unité 8.

Dès que le manocontact 13 s'ouvre, la valeur du niveau affiché reste mémorisée pendant 30 secondes, par exemple; puis la lampe 16 s'éteint et l'affichage retombe à zéro pour une durée de 3 secondes. La séquence continue ensuite, comme dans le cas où le manocontact est initialement ouvert.

Si le manocontact 13 est ouvert, la lampe 16 s'éteint; le circuit électronique 26, 27, 29 de l'interface S mesure en permanence la pression captée par le capteur 2, cette mesure est traitée et affichée en permanence par l'unité 8.

La réalisation des différentes temporisations peut être réalisée par division de fréquence d'une base de temps unique définie par un quartz 30 donc ne dénessitant aucun étalonnage.

Un circuit d'alimentation 32 fournit les tensions voulues, dans l'exemple représenté, 5 et 12 volts.

Revendications

1. Dispositif de mesure et d'affichage de niveau et/ou autre caractéristique analogue d'un liquide d'un réservoir, notamment, pression, température et tension, en particulier de l'huile dans un carter-moteur de véhicule automobile, du type comportant au moins un capteur de mesure de type analogique, une unité de traitement numérique des signaux émis par le capteur et un interface de conversion analogique/numérique interpose entre le capteur et l'unité de traitement, caractérisé par le fait que la conversion analogique/numérique des mesures de niveau est réalisée en mesurant le temps que met un condensateur pour se charger à une tension égale à celle qui existe aux bornes du capteur, dont on veut traiter et afficher la mesure.

2. Dispositif selon la revendication 1, dans lequel l'ordre de mesure est donné en bloquant un transistor, monté en parallèle avec le condensateur, et la mesure obtenue en comptant, à partir de l'instant de blocage, le nombre de périodes élémentaires jusqu'à ce que la sortie mesure passe au niveau 1.

3. Dispositif selon l'une des revendications 1 ou 2, dans lequel le capteur de niveau est une sonde à fil chaud, et elle est reliée à l'unité de traitement par un étage générateur de courant commandé par cette unité.

4. Dispositif selon la revendication 3, dans lequel le courant est transmis à la sonde de niveau par l'intermédiaire d'un transistor ou d'un darlington dont la base est mise au niveau 0 ou au niveau 1 par l'unité de traitement.

5. Dispositif selon l'une des revendications 1 à 4, dans lequel le récepteur d'affichage des mesures est unique et un témoin lumineux est prévu permettant d'indiquer quelle mesure, niveau ou pression, est affichée.

6. Dispositif selon l'une des revendications 1 à 5, dans lequel la conversion analogique/numérique des mesures de niveau est réalisée en mesurant le temps que met un condensateur pour se charger à une tension égale à celle qui existe aux bornes du capteur, dont on veut traiter et afficher la mesure.

7. Dispositif selon l'une des revendications précédentes, dans lequel l'unité de traitement est étalonnée par "apprentissage", c'est-à-dire par présentation successive à celle-ci d'étalons de sondes niveau mini et niveau maxi et d'émetteurs de pression mini et éventuellement maxi.

8. Dispositif selon l'une des revendications précédentes dans lequel l'unité de traitement est un microprocesseur.

FIG.1

0094315

FIG.2